# EUROPEAN PATENT SPECIFICATION

(11) **EP 2 021 757 B1**
(45) Date of publication and mention of the grant of the patent: **06.04.2011**
(21) Application number: 07867119.5
(22) Date of filing: 15.05.2007
(51) Int. Cl.: G01L 9/12

(54) **HERMETIC CHAMBER WITH ELECTRICAL FEEDTHROUGHS**
HERMETISCHE KAMMER MIT ELEKTRISCHEN DURCHFÜHRUNGEN
CHAMBRE HERMÉTIQUE AVEC DES TRAVERSÉES ÉLECTRIQUES

(30) Priority: 17.05.2006 US 801134 P
(43) Date of publication of application: 11.02.2009
(73) Proprietor: CardioMems, Inc., Atlanta, GA 30313 (US)
(72) Inventor: O'BRIEN, David, Norcross, GA 30092 (US); COURCIMAULT, Christophe, Avondale Estates, GA 30002 (US); YOU, Liang, Alpharetta, GA 30022 (US)
(74) Representative: Boff, James Charles
(86) International application number: PCT/US2007/011612
(87) International publication number: WO 2008/066569

(56) References cited:
- WO-A-2005/019785
- WO-A-2006/086113
- WO-A-2007/047571
- WO-A-2007/047794
- DE-A1- 10 052 053
- US-A- 4 617 606
- US-A- 4 773 972
- US-A- 5 740 594
- US-A- 5 974 894
- US-B1- 6 812 404

## Description

### FIELD OF THE INVENTION

The present invention relates to micromachinable, pico- to nanoliter-volume, hermetic packaging that incorporates reliable electrical feedthroughs, and sensors configured utilizing the same, all of which are intended to perform reliably in harsh and biological environments.

### BACKGROUND OF THE INVENTION

Over the past 20 years, advances in the field of microelectronics have enabled the realization of microelectromechanical systems (MEMS) and corresponding batch fabrication techniques. These developments have allowed the creation of sensors and actuators with micrometer-scale features. With the advent of the above-described capability, heretofore implausible applications for sensors and actuators are now significantly closer to commercial realization.

In parallel, much work has been done in the development of pressure sensors. Pressure sensors are disclosed, for example, in U.S. Patent No. 6,111,520, issued August 29, 2000; U.S. Patent No. 6,278,379, issued August 21, 2001; U.S. Patent No. 6,855,115, issued February 15, 2005; U.S. Patent Application Serial No. 10/054,671, filed January 22, 2002; U.S. Patent Application Serial No. 10/215,377, filed August 7, 2002; U.S. Patent Application Serial No. 10/215,379, filed August 7, 2002; U.s. Patent Application Serial No. 10/943,772, filed September 16, 2004; and U.S. Patent Application Serial No. 111157,375, filed June 21, 2005; U.S. Patent Application Serial No. 111314,696 filed December 20, 2005; and U.S. Patent Application Serial No. 111402,439 filed April 12, 2006 all of which are incorporated herein by reference.

In particular, absolute pressure sensors, in which the pressure external to the sensor is read with respect to an internal pressure reference, are of interest. The internal pressure reference is a volume within the sensor, sealed, which typically contains a number of moles of gas (the number can also be zero, i.e. the pressure reference can be a vacuum, which can be of interest to reduce temperature sensitivity of the pressure reference as known in the art). The external pressure is then read relative to this constant and known internal pressure reference, resulting in measurement of the external absolute pressure. For stability of the pressure reference and assuming the temperature and volume of the reference are invariant or substantially invariant, it is desirable that the number of moles of fluid inside the reference does not change. One method to approach this condition is for the reference volume to be hermetic.

The term *hermetic* is generally defined as meaning "being airtight or impervious to air." In reality, however, all materials are, to a greater or lesser extent, permeable, and hence specifications must define acceptable levels of hermeticity. An acceptable level of hermeticity is therefore a rate of fluid ingress or egress that changes the pressure in the internal reference volume (a.k.a. pressure chamber) by an amount preferably less than 10 percent of the external pressure being sensed, more preferably less than 5 percent, and most preferably less than 1 percent over the accumulated time over which the measurements will be taken. In many biological applications, an acceptable pressure change in the pressure chamber is on the order of 1.5 mm Hg/year.

The pressure reference is typically interfaced with a sensing means that can sense deflections of boundaries of the pressure reference when the pressure external to the reference changes. A typical example would be bounding at least one side of the pressure reference with a deflectable diaphragm or plate and measuring the deflection of the diaphragm or plate by use of, among other techniques, a piezoresistive or a capacitance measurement. If the deflection of the diaphragm or plate is sufficiently small, the volume change of the pressure reference does not substantially offset the pressure in the pressure reference.

These approaches may require an electrical feedthrough to the hermetic environment (e.g., to contact electrodes inside the hermetic pressure reference), for connection to outside electronics to buffer or transmit the signal. Alternatively, electronics may be incorporated within the reference cavity, requiring power to be conducted into the hermetic environment. To maintain stability of the pressure reference, these seals should also be hermetic, resulting in the necessity to develop a feedthrough technology for contacts through the cavity walls. As is known in the art, such feedthrough points are typically sites for failure of hermeticity. This problem is further exacerbated when miniaturizing the sensor, since the total volume of material available for hermetic sealing shrinks proportionally and the reliability of the feedthrough is also greatly reduced. In the limit of ultraminiaturized sensors, such as those producible using microelectromechanical systems (MEMS) technology, one of the major challenges to enabling the use of such devices in applications where they are physically connected to other devices has been the creation of reliable hermetic packaging that provides feedthroughs that enable exchange of power and information with external electronics.

Design criteria for ultra miniature packaging that overcomes the aforementioned shortcomings are as follows: The packaging must exhibit long term hermeticity (on the order of the life of the sensor, which in some cases can exceed tens of years). Feedthroughs must be provided through the hermetic package that do not introduce new or unnecessary potential modes of failure. The feedthroughs will constitute a necessary material interface, but all other interfaces can and should be eliminated. In other words, the number and area of material interfaces should be minimized to reduce the potential for breach of hermeticity. The materials selected must be compatible with the processes used to fabricate the package as well as sufficiently robust to resist deleterious corrosion and biocompatible to minimize the body's immune response. Finally, the packaging should be amenable to batch fabrication.

In the past, many methods for creating such hermetic packages have been proposed. One approach used in the past to create the pressure cavity is anodic bonding to create a siliconto- glass seal. A borosilicate glass is required for this method. Another technique utilized in the creation of hermetic packages is eutectic bonding to create a silicon to metal hermetic seal, e.g. Au to Si. Both of these bonding methods used to create the pressure cavity introduce a large area along the perimeter of the material interface of the pressure cavity package which presents opportunity for failure, e.g. through corrosion. These methods for creating the pressure cavity do not minimize the area of the material interface as is desirable. A desirable improvement to the construction of the pressure cavity would minimize the material interface to the hermetic electrical feedthroughs, and, even further, minimize the number and area of material interfaces in those feedthroughs.

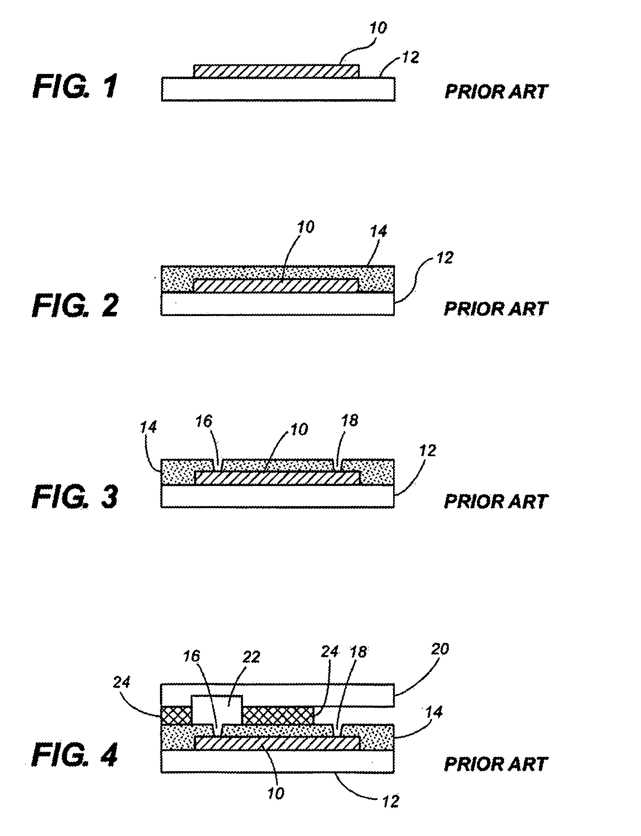

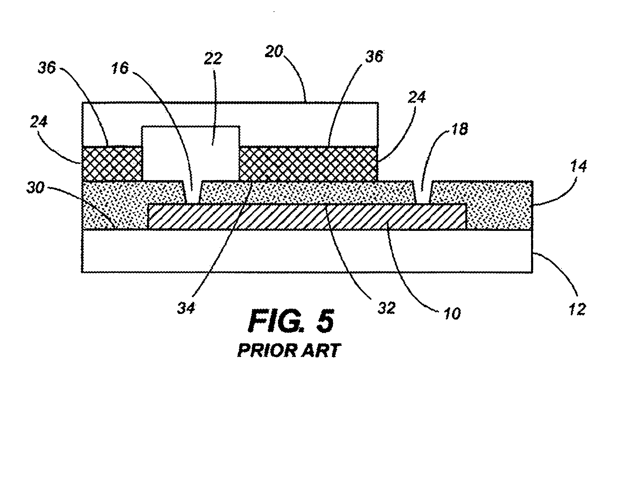

Previous attempts to create hermetic feedthroughs also fall short of the above-stated requirements. Many prior art hermetic feedthroughs are too large and not amenable to the required miniaturization for pico- to nanoliter volume packaging achievable by MEMS or similar approaches. Furthermore, earlier attempts to create feedthroughs in pico to nanoliter packaging are prone to corrosion because of the materials used in construction or are sufficiently complicated that they introduce more material interfaces than are necessary. A representative feedthrough approach, known as a "buried" feedthrough, is illustrated in FIGS. 1-5. One method for creating a buried feedthrough is as follows: a metal 1Ois deposited onto substrate 12 in a predefined pattern, as shown in FIG. 1. An insulating layer 14 is deposited on top of the metal layer, as shown in FIG. 2, and this insulating layer 14 is polished to planarize this surface. In FIG. 3 an etchant has been used to expose the metal layer at input and output sites 16, 18 for the feedthroughs. In FIG. 4, another substrate 20 is bonded on top of this structure, forming a hermetic cavity 22. A eutectic bonding method is illustrated, which involves the use of gold deposits 24 interposed between the insulating layer 14 and the upper substrate 20 to bond the upper substrate to the insulating layer. In FIG. 5 the upper substrate 20 is machined to expose the external feedthrough 18. An electrical conductor can now be connected to the external feedthrough 18, whereupon it is conducted through the metal 10 to the internal feedthrough 16 and thus to a location within the hermetically sealed chamber 22.

This prior art buried feedthrough suffers a number of disadvantages. First, there are numerous material interfaces: an interface 30 between the lower substrate 12 and the metal 10; an interface 32 between the metal 12 and the insulating layer 14, an interface 34 between the insulating layer 14 and the gold 24; and an interface 36 between the gold 24 and the upper substrate 20, all of which create potential paths for infusion into or effusion out of the hermetic chamber 22. The creation of this buried feedthrough also introduces increased processing steps. Further, the insulating layer material is cited as being prone to corrosion in certain environments, e.g. the human body. Corrosion issues may be further exacerbated by the application of electrical bias to metal 10 which may be required in certain applications. Thus prior art hermetic feedthroughs fall short of meeting the constraints outlined above.

Also, many prior art attempts to provide pressure sensors utilize silicon as a substrate material. If the package is implanted in vivo, silicon is not an optimal material choice. Silicon invokes an undesirable immune response over other, more inert materials such as fused silica. If silicon is used, a coating must be applied to ensure biocompatibility. Such a coating increases the package size, thereby decreasing the benefits of miniaturization, and introduces an undesirable additional processing step in the manufacture of the package.

Additionally, prior art devices commonly employ the use of borosilicate glass as part of the pressure cavity. The ions in borosilicate glass constitute an impurity in the glass. The barrier to diffusion of water decreases as the purity of glass decreases. This makes use of impure glass undesirable in such applications.

WO2005/019785 discloses a capacitive sensor comprising a housing having a cavity, diaphragm forming a part of the cavity, and a plate housed within the cavity, conductive layers on the plate and cavity forming a capacitance that varies with spacing between the diaphragm and the plate.
W02006/086113, published after the priority date of the present application, discloses a device comprising: a housing having walls defining a chamber, a first one of said walls defining said chamber comprising an exterior wall of said housing; a passage through said first one of said walls placing the chamber of said housing in communication with the ambient; and an electrode hermetically imposed over said passage within said chamber of said housing, whereby said passage is hermetically sealed; whereby said chamber is hermetically sealed; and whereby an external electrical device can be placed in electrical communication with said electrode through said passage.

Thus a need exists for hermetic pico to nanoliter packaging with electrical feedthroughs for use in biological environments, such packaging being constructed of high-purity materials and having a reduced number and area of material interfaces.

### SUMMARY OF THE INVENTION

The present invention provides a device as claimed in the appended claims.

### BRIEF DESCRIPTION OF THE DRAWINGS

FIG. 1 is a schematic representation of a first step in manufacturing a PRIOR ART hermetic chamber with electrical feedthroughs.

FIG. 2 is a schematic representation of a second step in manufacturing a PRIOR ART hermetic chamber with electrical feedthroughs.

FIG. 3 is a schematic representation of a third step in manufacturing a PRIOR ART hermetic chamber with electrical feedthroughs.

FIG. 4 is a schematic representation of a fourth step in manufacturing a PRIOR ART hermetic chamber with electrical feedthroughs.

FIG. 5 is a schematic representation of a completed PRIOR ART hermetic chamber with electrical feedthroughs.

FIG. 6 is a cutaway view of a device according to the present invention as seen along line 29-29 of FIG. 7.

FIG. 7 is a cutaway view as seen along line 30-30 of FIG. 6.

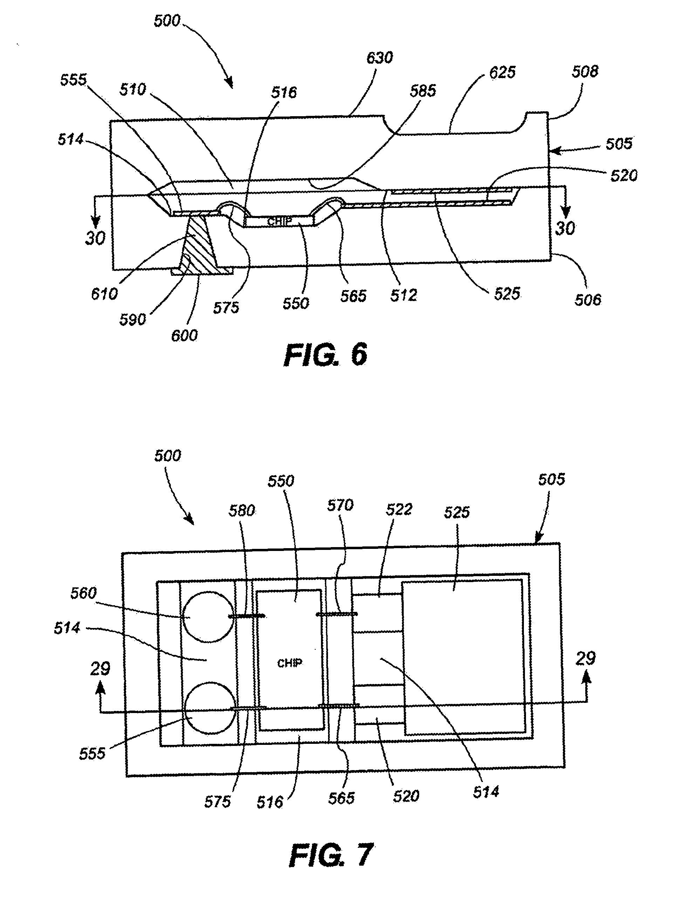

FIGS. 6 and 7 illustrate a sensor 500 comprising a sensor body 505 of fused silica, or other suitable material, [Suitable materials may be selected from a group comprising glass, fused silica, sapphire, quartz, or silicon]. The sensor body 505 comprises a lower wall 506 and an upper wall 508. The lower wall 506 further comprises a first trench 514 and a second trench 516 formed within a portion of the first trench 514. The sensor body 505 further defines a hermetic chamber 510. Located within the hermetic chamber 510 on the lower wall 506 in the area comprising the first trench 514 are electrode 520 and electrode 522. The electrode 522 is behind and in-plane with the first electrode 520 and is thus not visible in Figure 6. Another electrode 525 is located within the hermetic chamber 510 on the upper wall 508 and is positioned such that it is in parallel, spaced-apart relation with respect to electrode 520 and electrode 522. Electrode 520, electrode 522 and electrode 525 combine to form a gap capacitor.

The second trench 516 in the lower wall 506 contains a silicon chip 550 bearing electronics. Located on the opposite side of the first trench 514 from the electrodes 520, 522, and 525 are electrode 555 and electrode 560. Electrode 560 is behind and in-plane with the electrode 555 and is thus not visible in Figure 6. A conductor 565 places the electrode 520 in electrical communication with a wire bond on the chip 550. Similarly, a conductor 570 places the electrode 522 in electrical communication with a second wire bond on the chip 550. The wire bond 570 is behind and in-plane with the wire bond 565 and is thus not visible in Figure 6. A third conductor 575 places the electrode 555 in electrical communication with a third wire bond on the chip 550. A fourth conductor 580 places the electrode 560 in electrical communication with a fourth wire bond on the chip 550.

A third trench 585 is provided in the upper wall 508. The upper wall 508 of the sensor 500 acts as a deflective region 625 and is configured to be sufficiently thin to deflect in response to physiologically relevant pressure changes. The electrode 525 is coupled to this deflective region 625 so that the distance between the electrode 525 and the electrodes 520, 522 changes with variations in external pressure, thereby changing the characteristic capacitance of the capacitor.

The lower wall 506 of the sensor body 505 comprises passages 590 and 595 that traverse the sensor body 505 and are in contact with the electrodes 555, 560. As shown in FIGS. 6 and 7, electrical contact pads 600, 605 can be formed on the back side of the electrodes 555, 560 and extend to the exterior of the housing, thereby providing a region on the exterior of the sensor 500 configured with sufficient dimensions so as to allow for a means for connection with external electronics. As an alternative, the passages 590, 595 can be filled with an electrically conductive material, with contact pads 600, 605 in electrical communication with the electrodes 555, 560 by way of the conductive material 610. The electrode 555, the passage 590, and, if present, the electrical contact pad 600 and any electrically conductive material 610 filling the passage 590 comprises a first electrical feedthrough. The electrode 560, the passage 595, and, if present, the electrical contact pad 605 and any electrically conductive material 610 filling the passage 595 comprises a second electrical feedthrough.

The fabrication of the sensor 500 depicted in FIGS. 6 and 7 is based on the micromachining of two substrates that are subsequently brought into contact and cut into individual sensors. The fabrication of the individual sensors as well as their final assembly is described as follows: A lower substrate is provided. Into this lower substrate, a first trench is etched that is 2 mm by 5 mm and 3 micrometers deep using conventional masking processes and wet etching techniques, as described in earlier examples. A second trench is then etched in a portion of the lower substrate using the same methods as used in creation of the first trench. In the disclosed example, the second trench is 100 micrometers deep, 1.3 mm long, and 0.9 mm wide. Next, the four electrodes deposited on the lower wall are formed by conventional masking techniques and thin film techniques as described in previous examples. The chip is then inserted in the recessed cavity and fixed by, e.g., a press fit, adhesive, or eutectic bonding via additional metallic interfaces such as a soldered preforms. After the chip is placed and fixed to the lower substrate, the four conductors associated with the four electrodes deposited on the lower wall are made via conventional techniques, e.g., with wire that is 25 micrometers in diameter.

Next, the upper substrate is prepared. To this end, a third trench is etched into this wafer using the same techniques as used to create the first and second trenches of the lower substrate. In the disclosed embodiment, this trench is 2.5 mm long, 1.7 mm wide, and 0.1 mm deep. The electrode deposited on the upper wall is then created using the same techniques referenced in the creation of the electrodes on the lower substrate. This electrode deposited on the upper wall is 1.4 mm by 2 mm and made of 500 nm layer of Chrome/Gold.

Subsequent to individual fabrication of the substrates, the upper wafer is oriented with respect to the lower wafer such that the components are aligned as shown in FIGS. 6 and 7. The wafers form a temporary bond and are optionally further subjected to a 200°C oven for approximately two hours in order to increase the bond strength.

Passages 590, 595 are created through the exterior surface of the lower substrate using a CO₂ laser as described previously. After laser ablation, the passages are optionally subjected to a wet etch. The passages resulting from this process are approximately 200 micrometers at the exterior surface and about 50 micrometers at the interior surface and the back side of the fourth and fifth electrodes are exposed. Next, a metal layer is deposited through a shadow mask using a DC sputterer. Any suitable metal may be used. In one embodiment, the metal used is titanium and the resulting layer is 10 micrometers thick. This titanium layer is intended to establish electrical communication between the interior of the hermetic chamber and the ambient. Furthermore, the titanium layer increases the integrity of the hermetic cavity and provides further corrosion resistance.

The capacitor contained within the individualized sensor made with the above geometry is approximately 5 picofarads. It is obvious to one skilled in the art in light of the present disclosure to modify the spacing between the electrodes as well as the area of the interposed electrodes to increase or decrease the capacitance value.

The sensor is then individualized from the two wafer stack using the same method as disclosed in previous embodiments.

Regarding the manufacture of the sensor, the overall size of the resultant device can be reduced through use of an anisotropic etching method (e.g., ICP glass etching, ultrasonic glass etching) instead of isotropic wet etching. If the chip utilized in the example above is 800 by 1300 micrometers, the second trench in the lower wafer can very well be merely 810 by 1310 micrometers. Also, the capacitor area can be reduced to 700 microns by 800 microns by reducing the gap between the electrodes. Furthermore, the thickness of the fused silica package can also be reduced to about 100 micrometers by reducing the thickness of the wall surrounding the hermetic cavity. Thus, it follows that the sensor of the present embodiment can be reduced to final overall dimensions of I mm by 2.3 mm by 0.6 mm versus the disclosed example that results in a device that is 2 mm by 5 mm by 0.6 mm, as shown in Figure 7. In addition, if no chip is included in the sensor package the sensor (such as that disclosed in Figure 1) can achieve even smaller geometries. Also, as obvious to one skilled in the art, the aspect ratio (length to width) can be altered and achieve similar results.

In an alternative example, a piezoresistive transduction scheme can be utilized to measure changes in the position of the deflectable region in the pressure cavity. One or more piezoresistive elements translate mechanical strain into changes in electrical resistance. The piezoresistor is made of, e.g., polysilicon and formed on the interior of the pressure cavity in lieu of the electrodes in previous examples. The resistance modulation is, e.g., detected through a fully active Wheatstone bridge, as is known in the art. Optimally, the Wheatstone bridge configuration used is one where only one leg of the bridge is fixed to the deflectable region of the pressure cavity. This design reduces the number of feed throughs to two.

While the invention as been illustrated in the context of a biological device, it will be appreciated that the hermetic chamber herein described can be adapted to non-biological applications, for example, industrial applications in which a harsh environment is encountered.

## Claims

1. A device comprising:
(a) a housing having walls (506,505) defining a chamber (510), a first one of said walls (506) defining said chamber comprising an exterior wall of said housing; and
(b) a chip (550) bearing electronics located within said housing and comprising at least one wire bond, for enabling electrical communication to said electronics;
(c) a passage (590) through said first one of said walls (506);
(d) an electrode (555) hermetically imposed over said passage (590) within said chamber of said housing, whereby said passage (590) is hermetically sealed; and
(e) means (575) for establishing electrical connection between said wire bond and said electrode (555);
whereby said chamber is hermetically sealed; and
whereby an external electrical device can be placed in electrical communication with said electrode through said passage.

2. The device of claim 1, wherein said housing further comprises a unitary housing.

3. The device of claim 1, wherein said housing is comprised of a ceramic material.

4. The device of claim 3, wherein said housing is comprised of glass, fused silica, sapphire, quartz or silicon.

5. The device of claim 4, wherein the housing is comprised of fused silica.

6. The device of claim 1, wherein said passage has a surface area of from 10⁻⁶ to 10⁻¹² meters².

7. The device of claim 6, wherein said passage has a surface area of from 10⁻⁶ to 10⁻⁹ meters².

8. The device of claim 1, wherein said housing has a volume of from 10⁻⁸ to 10⁻¹⁵ meters³.

9. The device of claim 1, further comprising:
a second passage (595) through said first one of said walls (506);
a second electrode (560) hermetically imposed over said second passage within said chamber; and
said chip further comprising a second wire bond for enabling electrical communication to said electronics; and
means (580) for establishing electrical connection between said second wire bond and said second electrode.

10. The device of claim 9, further comprising:
(a) a second one of said walls (505) defining said chamber located opposite said first wall (506), said second one of said walls comprising
(i) an exterior wall of said housing, and
(ii) a deflectable region (625);
(b) a third electrode (525) deposited on said second one of said walls (505) within said chamber in said deflectable region (625);
(c) a fourth electrode (520) deposited on said first one of said walls and a third wire bond operatively associated with said chip,
(d) means (565) for establishing electrical connection between said third wire bond and said fourth electrode;
(e) a fifth electrode (522) deposited on said first one of said walls and a fourth wire bond operatively associated with said chip; and
(f) means (522) for establishing electrical connection between said fourth wire bond and said fifth electrode;
wherein said third, fourth and fifth electrodes (525,520,522) comprise a capacitor.

11. The device of claim 1, wherein said passage is partially filled with an electrically conductive material such that said electrically conductive material is in electrical contact with said electrode.

12. The device of claim 11, wherein the remainder of said passage is filled with a different material.

13. The device of claim 12, wherein said different material comprises a ceramic.

14. The device of claim 1, wherein said passage is completely filled with an electrically conductive material, whereby an external electrical device can be placed in electrical communication with said electrode by electrically connecting said electrical device to said electrically conductive material.

15. The device of claim 11 or claim 14, wherein said electrically conductive material is hermetic and is hermetically disposed in said passage.

## Patentansprüche

1. Vorrichtung umfassend:
a) ein Gehäuse mit einer Kammer (510) begrenzenden Wänden (506, 505), eine erste der Kammer begrenzenden Wände (506) umfasst eine Außenwand des Gehäuses; und
b) ein innerhalb des Gehäuses angeordneten, elektronische Bauteile tragenden Chip (550) und umfassend wenigstens einen Drahtanschluss, um eine elektrische Kommunikation mit der Elektronik zu ermöglichen;
c) ein Durchgang (590) durch die erste der Wände (506);
d) eine hermetisch innerhalb der Kammer des Gehäuses über dem Durchgang (590) angeordnete Elektrode (555), wodurch der Durchgang (590) hermetisch abgedichtet ist; und
e) Mittel (575) zum Herstellen einer elektrischen Verbindung zwischen dem Drahtanschluss und der Elektrode (555);
wobei die Kammer hermetisch abgedichtet ist; und
wobei eine externe elektrische Vorrichtung durch den Durchgang in elektrische Kommunikation mit der Elektrode angeordnet werden kann.

2. Vorrichtung nach Anspruch 1, wobei das Gehäuse weiterhin ein unitäres Gehäuse umfasst.

3. Vorrichtung nach Anspruch 1, wobei das Gehäuse aus einem keramischen Material gebildet ist.

4. Vorrichtung nach Anspruch 3, wobei das Gehäuse aus Glas, Quarzglas, Saphir, Quarz oder Silizium gebildet ist.

5. Vorrichtung nach Anspruch 4, wobei das Gehäuse aus Quarzglas gebildet ist.

6. Vorrichtung nach Anspruch 1, wobei der Durchgang eine Oberfläche von 10⁻⁶ bis 10⁻¹² m² hat.

7. Vorrichtung nach Anspruch 6, wobei der Durchgang eine Oberfläche von 10⁻⁶ bis 10⁻⁹ m² hat.

8. Vorrichtung nach Anspruch 1, wobei das Gehäuse ein Volumen von 10⁻⁸ bis 10⁻¹⁵ m³ hat.

9. Vorrichtung nach Anspruch 1, weiterhin umfassend:
einen zweiten Durchgang (595) durch die erste der Wände (506);
eine zweite hermetisch innerhalb der Kammer über den zweiten Durchgang angeordnete Elektrode (560); und
der Chip weiterhin einen zweiten Drahtanschluss umfasst zum Ermöglichen einer elektrischen Kommunikation zu der Elektronik; und
Mittel zum Herstellen einer elektrischen Verbindung zwischen dem zweiten Drahtanschluss und der zweiten Elektrode.

10. Vorrichtung nach Anspruch 9, weiterhin umfassend:
a) eine gegenüber der ersten Wand (506) angeordnete zweite von den die Kammer bildenden Wänden (505), die zweite von den Wänden umfasst
(i) je eine Außenwand des Gehäuses, und
(ii) einen auslenkbaren Bereich (625);
b) eine dritte innerhalb der Kammer auf der zweiten der Wände (505) in dem auslenkbaren Bereich (625) angeordnete Elektrode (525);
c) eine vierte auf der ersten der Wände angeordnete Elektrode und einen dritten wirkend mit dem Chip verbundenen Drahtanschluss,
d) Mittel (565) zum Herstellen einer elektrischen Verbindung zwischen dem dritten Drahtanschluss und der vierten Elektrode;
e) eine fünfte auf der ersten der Wände angeordnete Elektrode und einen vierten wirkend mit dem Chip verbundenen Drahtanschluss; und
f) Mittel (522) zum Herstellen einer elektrischen Verbindung zwischen dem vierten Drahtanschluss und der fünften Elektrode;
wobei die dritte, vierte und fünfte Elektrode (525, 520, 522) einen Kondensator umfassen.

11. Vorrichtung nach Anspruch 1, wobei der Durchgang teilweise mit einem elektrisch leitenden Material gefüllt ist, so dass das elektrisch leitende Material in elektrischem Kontakt mit der Elektrode ist.

12. Vorrichtung nach Anspruch 11, wobei der Rest des Durchgangs mit einem anderen Material gefüllt ist.

13. Vorrichtung nach Anspruch 12, wobei das andere Material ein keramisches Material umfasst.

14. Vorrichtung nach Anspruch 1, wobei der Durchgang komplett mit einem elektrisch leitenden Material gefüllt ist, wobei eine externe elektrische Vorrichtung in elektrische Verbindungen mit der Elektrode durch elektrisches Verbinden der elektrischen Vorrichtung mit dem elektrisch leitenden Material angeordnet werden kann.

15. Vorrichtung nach Anspruch 11 oder Anspruch 14, wobei das elektrisch leitende Material hermetisch ist und hermetisch in dem Durchgang angeordnet ist.

## Revendications

1. Dispositif comprenant :
(a) un logement ayant des parois (506, 505) définissant une chambre (510), une première desdites parois (506) définissant ladite chambre comprenant une paroi extérieure dudit logement ; et
(b) une puce (550) portant un circuit électronique placée à l'intérieur dudit logement et comprenant au moins une connexion par fil, pour permettre une communication électrique avec ledit circuit électronique ;
(c) un passage (590) à travers ladite première desdites parois (506) ;
(d) une électrode (555) appliquée hermétiquement sur ledit passage (590) à l'intérieur de ladite chambre dudit logement, de sorte que ledit passage (590) soit scellé hermétiquement ; et
(e) des moyens (575) pour établir une connexion électrique entre ladite connexion par fil et ladite électrode (555) ;
de sorte que ladite chambre soit scellée hermétiquement ; et
de sorte qu'un dispositif électrique externe puisse être placé en communication électrique avec ladite électrode à travers ledit passage.

2. Dispositif selon la revendication 1, dans lequel ledit logement comprend en outre un logement unitaire.

3. Dispositif selon la revendication 1, dans lequel ledit logement est constitué d'un matériau céramique.

4. Dispositif selon la revendication 3, dans lequel ledit logement est constitué de verre, de verre de silice, de saphir, de quartz ou de silicium.

5. Dispositif selon la revendication 4, dans lequel ledit logement est constitué de verre de silice.

6. Dispositif selon la revendication 1, dans lequel ledit passage a une surface spécifique de 10⁻⁶ à 10⁻¹² mètres².

7. Dispositif selon la revendication 6, dans lequel ledit passage a une surface spécifique de 10⁻⁶ à 10⁻⁹ mètres².

8. Dispositif selon la revendication 1, dans lequel ledit logement a un volume de 10⁻⁸ à 10⁻¹⁵ mètres³.

9. Dispositif selon la revendication 1, comprenant en outre :
un second passage (595) à travers ladite première desdites parois (506) ;
une deuxième électrode (560) déposée hermétiquement sur ledit second passage
à l'intérieur de ladite chambre ; et
ladite puce comprenant en outre une deuxième connexion par fil pour permettre une communication électrique avec ledit circuit électronique ; et
des moyens (580) pour établir une connexion électrique entre ladite seconde connexion par fil et ladite deuxième électrode.

10. Dispositif selon la revendication 9, comprenant en outre :
(a) une seconde desdites parois (505) définissant ladite chambre placée à l'opposé de ladite première paroi (506), ladite seconde desdites parois comprenant :
(i) une paroi extérieure dudit logement et
(ii) une région déformable (625) ;
(b) une troisième électrode (525) déposée sur ladite seconde desdites parois (505) à l'intérieur de ladite chambre dans ladite région déformable (625) ;
(c) une quatrième électrode (520) déposée sur ladite première desdites parois et une troisième connexion par fil associée en service à ladite puce,
(d) des moyens (565) pour établir une connexion électrique entre ladite troisième connexion par fil et ladite quatrième électrode ;
(e) une cinquième électrode (522) déposée sur ladite première desdites parois et une quatrième connexion par fil associée en service à ladite puce ; et
(d) des moyens (522) pour établir une connexion électrique entre ladite quatrième connexion par fil et ladite cinquième électrode ;
dans lequel lesdites troisième, quatrième et cinquième électrodes (525, 520, 522) constituent un condensateur.

11. Dispositif selon la revendication 1, dans lequel ledit passage est partiellement rempli de matériau électroconducteur de sorte que ledit matériau électroconducteur soit en contact électrique avec ladite électrode.

12. Dispositif selon la revendication 11, dans lequel le restant dudit passage est rempli d'un matériau différent.

13. Dispositif selon la revendication 12, dans lequel ledit matériau différent comprend une céramique.

14. Dispositif selon la revendication 1, dans lequel ledit passage est complètement rempli d'un matériau électriquement conducteur, de sorte qu'un dispositif électrique externe puisse être placé en communication électrique avec ladite électrode par connexion électrique dudit dispositif électrique audit matériau électriquement conducteur.

15. Dispositif selon la revendication 11 ou la revendication 14, dans lequel ledit matériau électroconducteur est hermétique et est disposé de manière hermétique dans ledit passage.
